(19) Europäisches Patentamt
European Patent Office
Office européen des brevets

(11) **EP 3 726 725 B1**

(12) **EUROPÄISCHE PATENTSCHRIFT**

(45) Veröffentlichungstag und Bekanntmachung des Hinweises auf die Patenterteilung:
**20.07.2022 Patentblatt 2022/29**

(21) Anmeldenummer: **20192723.3**

(22) Anmeldetag: **25.08.2020**

(51) Internationale Patentklassifikation (IPC):
*H02P 21/04* (2006.01)   *H02P 21/13* (2006.01)
*H02P 6/182* (2016.01)   *H02P 6/21* (2016.01)
*H02P 1/52* (2006.01)   *H02P 21/34* (2016.01)
*H02P 21/14* (2016.01)

(52) Gemeinsame Patentklassifikation (CPC):
**H02P 21/04; H02P 1/52; H02P 6/182; H02P 6/21; H02P 21/13; H02P 21/14; H02P 21/34;** H02P 21/18; H02P 2203/03

(54) **VERFAHREN ZUM HOCHFAHREN EINER GEBERLOSEN PERMANENTMAGNET-SYNCHRONMASCHINE**

METHOD FOR STARTING UP A SENSORLESS PERMANENT MAGNET SYNCHRONOUS MACHINE

PROCÉDÉ DE DÉMARRAGE D'UNE MACHINE SYNCHRONE À AIMANT PERMANENT SANS TRANSMETTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.10.2020 Patentblatt 2020/43**

(73) Patentinhaber: **Pfeiffer Vacuum Technology AG 35614 Asslar (DE)**

(72) Erfinder: **Wang, Jinou 35606 Solms-Oberbiel (DE)**

(74) Vertreter: **Manitz Finsterwald Patent- und Rechtsanwaltspartnerschaft mbB Martin-Greif-Strasse 1 80336 München (DE)**

(56) Entgegenhaltungen:
**EP-A1- 3 413 458      EP-A2- 3 651 347 DE-A1-102013 014 480**

**Beschreibung**

Die Erfindung betrifft ein Verfahren zum Hochfahren einer geberlosen Permanentmagnet-Drehstromsynchronmaschine mittels eines Drehstrom-Wechselrichters vom Stillstand bis zu einer vorbestimmten Drehzahl. Ferner betrifft die Erfindung eine Permanentmagnet-Drehstromsynchronmaschine und eine Vakuumpumpe, die mittels einer solchen Permanentmagnet-Drehstromsynchronmaschine durch die Ausführung des Verfahrens vom Stillstand bis zu einer vorbestimmten Drehzahl hochgefahren wird.

Bei einem geberlosen Betrieb einer Permanentmagnet-Synchronmaschine wird die Winkelinformation, d. h. der Phasenwinkel, für den magnetischen Fluss des Rotors der Permanentmagnet-Synchronmaschine anhand einer Messung der durch den magnetischen Fluss induzierten Spannung ermittelt, die auch als rückwirkende elektromagnetische Kraft (Gegen-EMK) bezeichnet wird. Es hat sich gezeigt, dass der geberlose Betrieb, der auf einem Modell der Gegen-EMK basiert, aufgrund seiner Robustheit und seiner hohen Leistungsfähigkeit im Bereich mittlerer bis hoher Drehzahlen eine optimale Lösung für Anwendungen der Permanentmagnet-Synchronmaschine darstellt, beispielsweise als Antrieb eines Rotors in einer Vakuumpumpe. Es gibt zwar Ansätze, welche die Einspeisung eines Hochfrequenzsignals verwenden, um die Winkelinformation für den magnetischen Fluss des Rotors ohne die Kenntnis der Gegen-EMK zu extrahieren. Das Leistungsvermögen dieser Ansätze ist jedoch mit zunehmender Drehzahl der Permanentmagnet-Synchronmaschine eingeschränkt.

Zur Messung der induzierten Spannung bzw. der Gegen-EMK ist es außerdem erforderlich, dass der Rotor der Permanentmagnet-Synchronmaschine eine gewisse Mindestdrehzahl aufweist. Daher umfasst der geberlose Betrieb der Permanentmagnet-Synchronmaschine über den gesamten Drehzahlbereich zwei unterschiedliche Modi: einen Normalmodus bei mittlerer bis hoher Drehzahl, in welchem ein geberloser Betrieb unter Verwendung der Gegen-EMK erfolgt, und einen Modus bei niedriger Drehzahl, in welchem spezielle Ansätze zum Antreiben der Permanentmagnet-Synchronmaschine verwendet werden müssen, ohne dass die Information bezüglich der Gegen-EMK vorliegt. Ein problemloser Übergang zwischen den zwei Modi ist für die Stabilität und Robustheit des gesamten geberlosen Betriebs entscheidend.

Der Hauptzweck des Modus bei niedriger Drehzahl besteht ähnlich wie beim Starten eines Verbrennungsmotors darin, die Permanentmagnet-Synchronmaschine mittels eines beliebigen Verfahrens auf eine Drehzahl zu bringen, bei welcher das Umschalten in den Normalmodus möglich ist, d. h. in den Betrieb basierend auf der Gegen-EMK. Es sind zwei Techniken zur Realisierung des Modus bei niedriger Drehzahl bekannt: ein Hochfahren mit Regelung, bei dem der Phasenwinkel des Rotors überwacht wird und dessen Beschleunigung angepasst wird, und ein gesteuertes Hochfahren ("Open Loop"), d. h. ohne Rückkopplung im Sinne einer Regelung, das im Wesentlichen eine Spannungs-Frequenzsteuerung ist. Beide Techniken sind jedoch nur für spezielle Typen der Permanentmagnet-Synchronmaschinen geeignet.

Das Hochfahren mit Regelung verwendet eine unsymmetrische magnetische Sättigung, die durch die Permanentmagneten des Rotors hervorgerufen wird. Solange das Rauschen eines eingespeisten HF-Signals akzeptierbar ist, ermöglicht dieser Ansatz ein erfolgreiches Hochfahren. Wenn der Stator der Synchronmaschine jedoch nicht dafür ausgelegt ist, in die magnetische Sättigung zu gelangen, oder wenn ein Wechselrichter der Synchronmaschine nicht leistungsfähig genug ist, um deren Windungen in die Sättigung zu treiben, funktioniert dieser Ansatz des Hochfahrens nicht mehr.

Bei dem gesteuerten Hochfahren, d. h. bei der Spannungs-Frequenzsteuerung zum Starten der Synchronmaschine ohne Rückkopplung, ist prinzipiell nicht sichergestellt, dass das Hochfahren wie gewünscht verläuft. Daher muss bei diesem Ansatz die Wirksamkeit des Hochfahrens nach der Verwendung der Spannungs-Frequenzsteuerung überprüft werden. Nach einer gewissen Zeitdauer, nach der das Hochfahren abgeschlossen sein sollte, wird der Wechselrichter bei diesem Ansatz vorübergehend abgeschaltet, um die induzierte Spannung bzw. Gegen-EMK zu messen, deren Amplitude proportional zu der Drehgeschwindigkeit des magnetischen Flusses des Rotors ist. Die Messung der induzierten Spannung ist essenziell, um den nachfolgenden geberlosen Betrieb im Normalmodus zu initialisieren. Nach Abschalten des Wechselrichters kann die Drehzahl des Rotors jedoch aufgrund der Reibung schnell abfallen, sodass eine Messung der induzierten Spannung nicht mehr möglich ist. In diesem Fall erfolgt kein Übergang in den Normalmodus, und der geberlose Betrieb der Permanentmagnet-Synchronmaschine kann nicht aufgenommen werden.

Diese Problematik ist besonders relevant beim Hochfahren einer Kombination einer Turbomolekularpumpe und einer entsprechenden Vorpumpe in einer Vakuumanlage, bei welcher zuerst die Vorpumpe hochgefahren wird und das Hochfahren der Turbomolekularpumpe erst dann beginnt, wenn der Druck innerhalb der Vakuumanlage gering genug ist. Nach Ausschalten des Wechselrichters fällt die Drehzahl der Vorpumpe aufgrund der Reibung üblicherweise sehr schnell ab, sodass die Messung der induzierten Spannung bzw. Gegen-EMK und der damit verbundene Übergang in den geberlosen Betrieb nicht erfolgen können.

In der EP 3 413 458 A1 ist ein Verfahren zum Hochfahren einer Einphasen-Synchronmaschine mittels eines Wechselrichters vom Stillstand bis zu einer vorbestimmten Drehzahl beschrieben. Spannungen, die zum Ansteuern der Synchronmaschine verwendet werden, sind anhand eines Spannungsvektors mit einem Betrag und einem Phasenwinkel definiert. Während einer ersten Stufe des Hochfahrens nimmt der Betrag des Spannungsvektors zunächst zu und anschließend derart ab, dass ein Maximum des Betrags des Spannungsvektors weder zu Beginn der ersten Stufe noch am Ende der ersten Stufe auftritt. Während einer zweiten Stufe des Hochfahrens nehmen hingegen sowohl der Betrag als auch eine Rotationsfrequenz des Spannungsvektors zu.

Eine Aufgabe der Erfindung besteht darin, ein Verfahren zu schaffen, mit dem die Zuverlässigkeit des Hochfahrens einer geberlosen Permanentmagnet-Synchronmaschine verbessert wird. Das Verfahren soll insbesondere für das Hochfahren einer Vorpumpe geeignet sein, die einer Turbomolekularpumpe zugeordnet ist. Diese Aufgabe wird durch ein Verfahren mit den Merkmalen des Anspruchs 1 gelöst. Das Verfahren ist zum Hochfahren einer geberlosen Permanentmagnet-Drehstromsynchronmaschine mittels eines Drehstrom-Wechselrichters vom Stillstand bis zu einer vorbestimmten Drehzahl vorgesehen. Die Permanentmagnet-Drehstromsynchronmaschine ist insbesondere für eine Vakuumpumpe vorgesehen, beispielsweise für eine Vorpumpe einer Turbomolekularpumpe. Spannungen, die zum Ansteuern der Permanentmagnet-Synchronmaschine verwendet werden, sind dabei anhand eines Spannungsvektors mit einem Betrag und einem Phasenwinkel festgelegt, wobei der Spannungsvektor in einem orthogonalen Koordinatensystem einen Realteil und einen Imaginärteil umfasst, die sich aus einer Clark-Transformation ergeben.

Gemäß dem Verfahren nimmt während einer ersten Stufe des Hochfahrens der Betrag des Spannungsvektors zunächst zu und anschließend wieder derart ab, dass ein Maximum des Betrags des Spannungsvektors weder zu Beginn noch am Ende der ersten Stufe auftritt. Während einer zweiten Stufe des Hochfahrens hingegen nehmen insbesondere sowohl der Betrag als auch eine Rotationsfrequenz des Spannungsvektors zu. Während einer dritten Stufe des Hochfahrens bleiben sowohl der Betrag als auch die Rotationsfrequenz des Spannungsvektors konstant, beispielsweise für eine vorbestimmte Zeitdauer, und am Ende der dritten Stufe wird eine Validierungsmaßnahme des Hochfahrens ausgeführt .

Da der Betrag und die Rotationsfrequenz des Spannungsvektors während der dritten Stufe des Hochfahrens konstant bleiben, stellt die dritte Stufe somit eine Stabilisierungsstufe dar, die dafür vorgesehen ist, dass die Permanentmagnet-Synchronmaschine in einen stationären Zustand übergeht. Durch die Stabilisierungsstufe wird die Initialisierung eines Gegen-EMK-Modells vorbereitet, um die Permanentmagnet-Synchronmaschine anschließend in einem Normalbetriebsmodus beispielsweise auf der Grundlage einer geschätzten Gegen-EMK geberlos betreiben zu können.

Aufgrund des konstanten Betrags und der konstanten Rotationsfrequenz des Spannungsvektors während der dritten Stufe befindet sich die Permanentmagnet-Synchronmaschine am Ende der dritten Stufe mit einer erhöhten Wahrscheinlichkeit im stationären Zustand, wodurch wiederum die Wahrscheinlichkeit erhöht wird, dass das Hochfahren der Permanentmagnet-Synchronmaschine mittels der Validierungsmaßnahme am Ende der dritten Stufe als erfolgreich bewertet wird. Die drei Stufen des Verfahrens werden vorzugsweise ohne Unterbrechung zeitlich nacheinander ausgeführt. Ferner erfolgt während der drei Stufen des Verfahrens eine direkte Beeinflussung des Spannungsvektors, ohne dass eine zusätzliche Stromregelung erforderlich oder vorgesehen ist. Somit stellt das erfindungsgemäße Verfahren eine Weiterentwicklung des eingangs beschriebenen gesteuerten Hochfahrens ("Open Loop") insbesondere mit Spannungs-Frequenzsteuerung dar.

Vorteilhafte Weiterbildungen der Erfindung sind in den Unteransprüchen, der Beschreibung und den Zeichnungen angegeben.

Gemäß einer Ausführungsform umfasst die Validierungsmaßnahme am Ende der dritten Stufe eine Schätzung einer rückwirkenden elektromotorischen Kraft (Gegen-EMK), und das Hochfahren der Synchronmaschine wird anhand der Schätzung der Gegen-EMK entweder als erfolgreich oder als fehlgeschlagen bewertet. Da die Gegen-EMK geschätzt und nicht direkt gemessen wird, ist das Abschalten des Drehstrom-Wechselrichters zur Messung der Gegen-EMK nicht erforderlich. Da der Drehstrom-Wechselrichter folglich auch während der dritten Stufe des Verfahrens weiterbetrieben und nicht abgeschaltet wird, erfolgt kein Abfallen der Drehzahl der Permanentmagnet-Synchronmaschine, das durch das Abschalten des Drehstrom-Wechselrichters hervorgerufen werden würde. Dadurch wird die Stabilität des Hochfahrens der Synchronmaschine verbessert und die Wahrscheinlichkeit erhöht, dass das Hochfahren als erfolgreich bewertet wird und ein korrekter Übergang in den geberlosen Betrieb der Synchronmaschine erfolgt.

Die Gegen-EMK kann ferner anhand gemessener Phasenspannungen und Phasenströme der Synchronmaschine sowie anhand von Parametern der Synchronmaschine geschätzt werden. Die Parameter der Synchronmaschine umfassen vorzugsweise einen Phasenwiderstand sowie eine Windungshauptinduktivität und einen Betrag eines magnetischen Flusses des Rotors der Synchronmaschine. Die Schätzung der Gegen-EMK verwendet bei dieser Ausführungsform somit entweder bekannte Parameter der Synchronmaschine wie etwa die Windungshauptinduktivität und Messgrößen, die zur Ansteuerung der Synchronmaschine ohnehin bekannt sind und kein Abschalten des Drehstrom-Wechselrichters erfordern.

Der Betrag der geschätzten Gegen-EMK kann darüber hinaus mit einem theoretischen Wert verglichen werden, der anhand eines Produkts des Betrags des magnetischen Flusses des Rotors der Synchronmaschine und der Rotationsfrequenz des Spannungsvektors während der dritten Stufe ermittelt wird. Dabei wird das Hochfahren der Synchronmaschine insbesondere dann als erfolgreich bewertet, wenn der Betrag der geschätzten Gegen-EMK höchstens um einen vorbestimmten Wert von dem theoretischen Wert abweicht, und ansonsten kann das Hochfahren der Synchronmaschine als fehlgeschlagen bewertet werden. Durch den vorbestimmten Wert, um den der Betrag der geschätzten Gegen-EMK von dem theoretischen Wert abweichen darf, werden Ungenauigkeiten und Messfehler der Größen berücksichtigt, anhand derer die Gegen-EMK geschätzt wird. Dadurch wird ein unnötiger Abbruch des Hochfahrens vermieden, der durch eine fehlerhafte Bewertung des Hochfahrens mittels der Validierungsmaßnahme hervorgerufen werden würde, die beispielsweise durch eine geringfügige Schwankung einer der Messgrößen bedingt sein könnte.

Gemäß einer weiteren Ausführungsform kann die Synchronmaschine dann, wenn das Hochfahren als erfolgreich bewertet wird, in einen Betriebsmodus mit einer Regelung basierend auf einem Modell für die Gegen-EMK übergeleitet werden.

Dieses Modell für die Gegen-EMK kann mit derjenigen Gegen-EMK initialisiert werden, die während der dritten Stufe des Verfahrens geschätzt wird.

Die Schätzung der Gegen-EMK während der dritten Stufe erfüllt somit eine doppelte Funktion, da anhand dieser Schätzung der Gegen-EMK einerseits das Hochfahren der Synchronmaschine bewertet wird und andererseits eine Initialisierung für das Modell der Gegen-EMK im Betriebsmodus nach der dritten Stufe bereitgestellt wird. Durch die Initialisierung der Gegen-EMK mittels der Schätzung aus der dritten Stufe kann somit ein glatter und einfacher Übergang von der dritten Stufe des Verfahrens in den Regelungsbetrieb erfolgen, welcher der dritten Stufe nachfolgt. Der Regelungsbetrieb erfolgt dabei feldorientiert, da die geschätzte Gegen-EMK von Betrag und Phase des magnetischen Flusses des Rotors abhängt, wobei der Betrag des magnetischen Flusses bei der Permanentmagnet-Synchronmaschine als Betriebsparameter fest vorgegeben ist und der Phasenwinkel des magnetischen Flusses anhand von gemessenen Strömen und Spannungen sowie anhand des Phasenwiderstands und der Windungshauptinduktivität geschätzt werden kann. Bei dem glatten Übergang von der dritten Stufe des Verfahrens in den Regelungsbetrieb ist es darüber hinaus nicht erforderlich, einen Wechselrichter der Permanentmagnet-Synchronmaschine vorübergehend abzuschalten, um die Gegen-EMK bzw. die induzierte Spannung zu messen. Da die Gegen-EMK stattdessen mit einem Schätzwert initialisiert wird, kann der Wechselrichter der Synchronmaschine auch beim Übergang von der dritten Stufe in den Regelungsbetrieb weiterhin kontinuierlich betrieben werden.

Wenn das Hochfahren hingegen als fehlgeschlagen bewertet wird, kann unter Verwendung eines unabhängigen Überwachungsmittels entschieden werden, ob die Synchronmaschine erneut gestartet wird. Das unabhängige Überwachungsmittel kann vorzugsweise einen Zähler umfassen, der jedes Mal dann auf 0 zurückgesetzt wird, wenn das Hochfahren als erfolgreich bewertet wird. Wird das Hochfahren hingegen als fehlgeschlagen bewertet, kann der Zähler jeweils um 1 erhöht werden. Ferner kann eine Fehlermeldung ausgegeben werden, wenn der Zähler eine vorbestimmte Zahl erreicht.

Wenn das Hochfahren als fehlgeschlagen bewertet wird, wird das Verfahren somit nicht notwendigerweise einfach abgebrochen, sondern es kann das Verfahren zum Hochfahren der Synchronmaschine für eine vorbestimmte Anzahl von Wiederholungen erneut gestartet werden. Dadurch kann die Anzahl unnötiger Fehlermeldungen verringert werden, da ein erneuter Start der Synchronmaschine mit hoher Wahrscheinlichkeit erfolgreich verläuft, wenn das Hochfahren zuvor eher zufällig als fehlgeschlagen bewertet wurde und/oder eine vorübergehende Störung vorlag. In diesem Fall wird keine Fehlermeldung ausgegeben wird. Das unabhängige Überwachungsmittel verbessert somit die Betriebssicherheit der Synchronmaschine. Neben dem Zähler kann das unabhängige Überwachungsmittel weitere Einrichtungen zur Überwachung von Betriebsparametern der Synchronmaschine umfassen, und ein erneutes Starten der Synchronmaschine kann dann verhindert werden, wenn einer dieser Betriebsparameter außerhalb eines vorbestimmten Bereichs liegt.

Während der ersten Stufe kann der Betrag des Spannungsvektors von 0 bis zu einem Maximalwert zunehmen und anschließend wieder bis zu einem Wert abnehmen, der größer als 0 ist, während die Rotationsfrequenz des Spannungsvektors in der Nähe von 0 liegt, d. h. 0 oder einige wenige Hertz beträgt. "Einige wenige Hertz" bedeutet in diesem Zusammenhang einen Wert kleiner als 10 Hertz. Aufgrund der sehr geringen Rotationsfrequenz des Spannungsvektors kann der Rotor der Synchronmaschine während der ersten Stufe bei einer bekannten Ausrichtung nahezu im Stillstand gehalten werden. Daher kann die erste Stufe als Synchronisationsstufe bezeichnet werden.

Während der zweiten Stufe kann die Rotationsfrequenz des Spannungsvektors linear von einem Anfangswert bis zu einem Endwert zunehmen, wobei der Anfangswert vorbestimmt und insbesondere gleich einer konstanten Rotationsfrequenz des Spannungsvektors während der ersten Stufe ist.

Da die Rotationsfrequenz des Spannungsvektors während der zweiten Stufe bis zu einem Endwert zunehmen kann, erfolgt die Beschleunigung des Rotors der Synchronmaschine während der zweiten Stufe bevorzugt derart, dass der Endwert der Rotationsfrequenz des Spannungsvektors der Drehzahl des Rotors am Ende des Hochfahrens entspricht. Bei dieser Drehzahl des Rotors kann nach der dritten Stufe des Verfahrens der Übergang in den geberlosen Betrieb erfolgen. Der Endwert der Rotationsfrequenz sollte ferner größer als ein vorbestimmter Wert sein, damit ein Modell für die Gegen-EMK während der dritten Stufe des Verfahrens und während des sich anschließenden geberlosen Betriebs verwendet werden kann.

Die Zeitdauer der zweiten Stufe kann beispielsweise 3 bis 30 Sekunden betragen, wobei die genaue Zeitdauer von den Parametern und der Leistung der Synchronmaschine abhängt. Die Zeitdauer für die erste Stufe kann hingegen lediglich 2 bis 5 Sekunden betragen. Darüber hinaus besteht während der zweiten Stufe eine Phasenverschiebung zwischen dem Spannungsvektor und dem magnetischen Fluss des Rotors, da ansonsten kein Drehmoment auf den Rotor übertragen werden könnte. Die Zeitdauer für die dritte Stufe kann hingegen lediglich etwa 1 Sekunde betragen.

Eine Differenz zwischen dem Endwert und dem Anfangswert der Rotationsfrequenz des Spannungsvektors kann ferner während der zweiten Stufe proportional zu einer Zunahme des Betrags des Spannungsvektors sein, die durch die Zunahme der Rotationsfrequenz hervorgerufen wird. Eine Zunahme des Betrags des Spannungsvektors ist während der zweiten Stufe erforderlich, um die zunehmende Gegen-EMK zu kompensieren, welche die Beschleunigung des Rotors ansonsten verringern würde.

Bei dem Übergang von der ersten zu der zweiten Stufe tritt vorzugsweise eine sprunghafte Änderung des Phasenwinkels des Spannungsvektors auf, die geringer als 90° sein kann und in Drehrichtung des Spannungsvektors erfolgen kann. Aufgrund der sprunghaften Änderung des Phasenwinkels sind der magnetische Fluss des Rotors und der Spannungsvektor nicht mehr miteinander ausgerichtet, sodass ein Drehmoment auf den Rotor übertragen werden kann.

Weiterer Gegenstand der Erfindung ist ferner eine Permanentmagnet-Synchronmaschine, bei der es sich um eine Drehstrommaschine handelt, die insbesondere für eine Vakuumpumpe vorgesehen ist, sowie eine Vakuumpumpe mit einer solchen Permanentmagnet-Synchronmaschine. Die Synchronmaschine umfasst einen Drehstrom-Wechselrichter und ist ausgebildet, um mittels des Drehstrom-Wechselrichters durch die Ausführung eines Verfahrens hochgefahren zu werden, wie es vorstehend beschrieben ist.

Nachfolgend wird die Erfindung beispielhaft anhand einer vorteilhaften Ausführungsform unter Bezugnahme auf die beigefügten Figuren beschrieben. Es zeigen, jeweils schematisch:

Fig. 1A einen beispielhaften Drehstrom-Wechselrichter für eine Permanentmagnet-Synchronmaschine, auf welche die vorliegende Erfindung anwendbar ist,

Fig. 1B einen in einem orthogonalen Koordinatensystem dargestellten Spannungsvektor als Ausgangspunkt für die Anwendung der Erfindung,

Fig. 2 den zeitlichen Verlauf des Betrags des Spannungsvektors während einer ersten Stufe oder Synchronisationsstufe einer Ausführungsform des erfindungsgemäßen Verfahrens,

Fig. 3A und 3B den zeitlichen Verlauf des Betrags bzw. der Rotationsfrequenz des Spannungsvektors während einer zweiten Stufe oder Hochlaufstufe einer Ausführungsform des erfindungsgemäßen Verfahrens

Fig. 4A und 4B den Betrag bzw. die Rotationsfrequenz des Spannungsvektors für eine dritte Stufe oder Stabilisierungsstufe einer Ausführungsform des erfindungsgemäßen Verfahrens,

Fig. 5 ein Zeigerdiagramm relevanter elektromagnetischer Größen für die dritte Stufe oder Stabilisierungsstufe und

Fig. 6 ein Diagramm einer Vakuumanlage, bei der eine Vakuumpumpe mit einer Permanentmagnet-Synchronmaschine angetrieben wird.

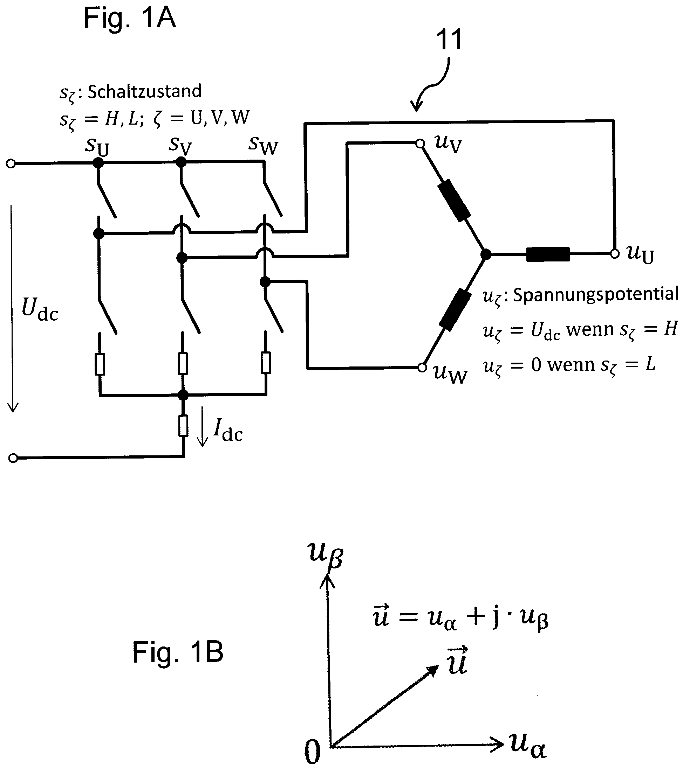

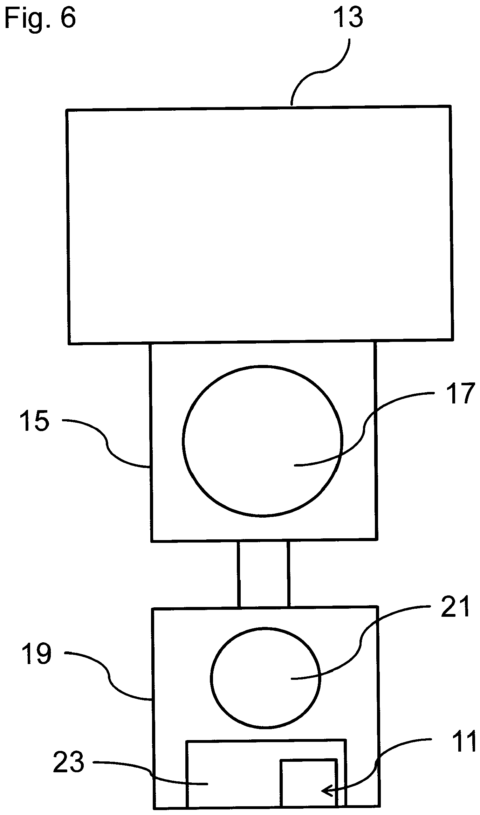

Fig. 1A zeigt schematisch einen beispielhaften Drehstrom-Wechselrichter 11, der für jede von drei Phasen $\zeta$ = U, V, W eine Halbbrücke aufweist, sodass die Ausgangsspannung $u_v$, $u_u$, $u_w$ einer jeweiligen Phase U, V, W entweder auf das positive oder auf das negative Zwischenkreispotential $U_{dc}$ gelegt werden kann. Die Ausgangsspannungen $u_v$, $u_u$, $u_w$ sind zur Versorgung entsprechender Elektromagneten einer Permanentmagnet-Synchronmaschine 23 (vgl. Fig. 6), d. h. für deren Stator, und somit zum Antreiben der Permanentmagnet-Synchronmaschine 23 vorgesehen. Das Spannungspotential $u_\zeta$ einer jeweiligen Phase $\zeta$ nimmt den Wert $U_{dc}$ an, wenn der Schaltzustand $s_\zeta$ gleich H ist, sowie den Wert 0, wenn der Schaltzustand $s_\zeta$ = L ist. Bei einem gegebenen Taktverhältnis $\lambda_\zeta \in [0,1]$ ergibt sich für die jeweilige Phase $\zeta$ eine Spannung $u_\zeta = \lambda_\zeta \times U_{dc}$.

Fig. 1B zeigt einen Spannungsvektor $\vec{u}$ in einem orthogonalen Koordinatensystem. Die Koordinaten des Koordinatensystems entsprechen dem Realteil $u_\alpha$ und dem Imaginärteil $u_\beta$ des Spannungsvektors. Der Spannungsvektor lässt sich somit durch folgende äquivalente Beziehungen darstellen:

$$\vec{u}(t) = u_\alpha + ju_\beta$$

$$\vec{u}(t) = u(t) \cdot e^{j(2\pi f(t)\cdot t + \gamma_0)} \qquad (1)$$

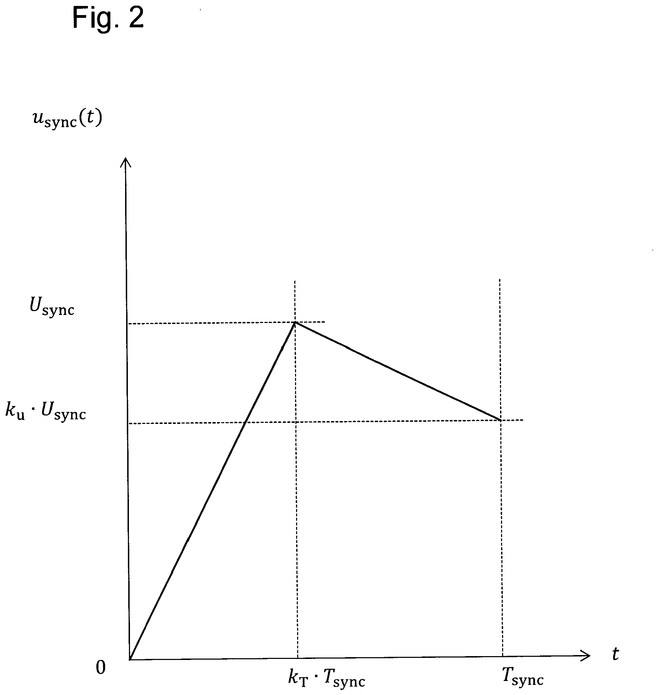

In der zweiten Gleichung bezeichnet f (t) die Rotationsfrequenz des Spannungsvektors, während $\gamma_0$ eine Phasenverschiebung ist. Fig. 2 ist somit das übliche Zeigerdiagramm des Spannungsvektors, dessen Amplitude oder Betrag u als Funktion der Zeit t mit der Frequenz f umläuft.

Die drei Spannungspotentiale oder Ausgangsspannungen $u_u$, $u_v$ und $u_w$ zur Versorgung der Permanentmagnet-Synchronmaschine 23 können unter Verwendung der Clarke-Transformation in den durch den Real- und Imaginärteil $u_\alpha$, $u_\beta$ definierten Spannungsvektor transformiert werden:

$$\begin{bmatrix} u_\alpha \\ u_\beta \end{bmatrix} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} u_U \\ u_V \\ u_W \end{bmatrix} \qquad (2)$$

Unter Verwendung der inversen Clarke-Transformation kann der gewünschte Spannungsvektor $\vec{u}^* = u_\alpha^* + j \cdot u_\beta^*$ wie folgt auf die drei auf das Nullpotential bezogenen Spannungspotentiale $u_{U,0}^*$, $u_{V,0}^*$ und $u_{W,0}^*$ transformiert werden:

$$\begin{bmatrix} u_{U,0}^* \\ u_{V,0}^* \\ u_{W,0}^* \end{bmatrix} = \begin{bmatrix} 1 & 0 \\ -\frac{1}{2} & \frac{\sqrt{3}}{2} \\ -\frac{1}{2} & -\frac{\sqrt{3}}{2} \end{bmatrix} \begin{bmatrix} u_\alpha^* \\ u_\beta^* \end{bmatrix} \qquad (3)$$

Das erfindungsgemäße Verfahren zum Hochfahren einer geberlosen Permanentmagnet-Synchronmaschine geht davon aus, dass beispielsweise ein in Fig. 1A dargestellter Drehstrom-Wechselrichter verwendet wird und dass das Hochfahren vom Stillstand eines Rotors der Permanentmagnet-Synchronmaschine bis zu einer vorbestimmten Drehzahl erfolgt.

In einer ersten Stufe oder Synchronisationsstufe des Verfahrens soll der Rotor der Synchronmaschine bei einer im Stillstand bekannten Ausrichtung gehalten werden. Dies ist notwendig, um die Permanentmagnet-Synchronmaschine mit einer korrekten oder gewünschten Beschleunigung zu starten.

Während der ersten Stufe oder Synchronisationsstufe des Verfahrens ist der Spannungsvektor entsprechend der vorstehenden Formel (1) folgendermaßen gegeben:

$$\vec{u}_{\text{sync}}(t) = u_{\text{sync}}(t) \cdot e^{j2\pi f_{\text{sync}}(t) \cdot t} \qquad (4)$$

Die Phasenverschiebung $\gamma_0$ soll während der Synchronisationsstufe 0 sein, und die Rotationsfrequenz ist während der Synchronisationsstufe konstant:

$$f_{\text{sync}}(t) = f_{\text{sync}} \qquad (5)$$

Die konstante Rotationsfrequenz $f_{\text{sync}}$ ist entweder gleich 0 oder beträgt einige wenige Hertz, d. h. weniger als 10 Hertz. Wenn $f_{\text{sync}} = 0$ ist, wird dies als stationäre Synchronisation bezeichnet. Wenn ein Antriebssystem, in das die Permanentmagnet-Synchronmaschine eingebunden ist, jedoch eine starke statische Reibung oder Haftreibung aufweist, ist es günstiger, während der Synchronisationsstufe einen sich sehr langsam drehenden Spannungsvektor zu verwenden, d. h. mit der vorstehend genannten Rotationsfrequenz < 10 Hz, um den Rotor der Synchronmaschine für das anschließende Hochfahren von dessen Lager lösen zu können.

In Fig. 2 ist der Betrag bzw. die Amplitude $u_{\text{sync}}$ des Spannungsvektors während der ersten Stufe oder Synchronisationsstufe als Funktion der Zeit t dargestellt. Die gesamte Zeitdauer der Synchronisationsstufe ist durch $T_{\text{sync}}$ gegeben und beträgt etwa 2 bis 5 Sekunden. Zu Beginn der Synchronisationsstufe steigt der Betrag des Spannungsvektors monoton von 0 bis zu einem Spitzenwert $U_{\text{sync}}$, der nach einer Zeitdauer $k_T \cdot T_{\text{sync}}$ erreicht wird, wobei $k_T \in (0,1)$ ist. Das Maximum $U_{\text{sync}}$ des Betrages des Spannungsvektors tritt folglich weder zu Beginn noch am Ende der Synchronisationsstufe auf. Nach dem Zeitpunkt $k_T \cdot T_{\text{sync}}$ nimmt der Betrag des Spannungsvektors wieder auf einen Wert $k_U \cdot U_{\text{sync}}$ ab, wobei $k_U \in (0,1)$ ist. Es ist wichtig, am Ende der Synchronisationsstufe eine Mindestspannung $k_U \cdot U_{\text{sync}} > 0$ sicherzustellen, um eine gewisse "Steifigkeit" zum Halten des Rotors zu erreichen, da angenommen wird, dass die Ausrichtung des angelegten Spannungsvektors am Ende der Synchronisationsstufe gleich der Ausrichtung des magnetischen Flusses des Rotors ist.

Grundsätzlich führt das Anlegen eines konstanten Spannungsvektors während der Synchronisationsstufe zu einem konstanten Stromvektor, der ein Drehmoment in Richtung von dessen Ausrichtung bewirkt, solange die Ausrichtung des magnetischen Flusses des Rotors nicht mit der Ausrichtung des Stromvektors zusammenfällt. Dies ist mit dem Verhalten einer Torsionsfeder vergleichbar, wobei der Betrag des Spannungsvektors die Steifigkeit dieser Feder festlegt. Bei einem System mit geringer Dämpfung kann eine Oszillation des Winkels des Rotors um die Ausrichtung des gegebenen Spannungsvektors auftreten. Um diese Oszillation zu verringern, steigt der Betrag des Spannungsvektors während der Synchronisationsstufe von 0 an. Wenn der magnetische Fluss des Rotors mit dem Spannungsvektor ausgerichtet ist, sollte die Steifigkeit der Feder wieder verringert werden, um ein Überschießen zu vermeiden. Daher sollte das Maximum des Betrags des Spannungsvektors weder zu Beginn noch am Ende der Synchronisationsstufe auftreten.

Die zweite Stufe des Verfahrens ist die eigentliche Hochfahr- oder Hochlaufstufe mit Steuerung ("Open Loop") unter Verwendung einer Spannungs-Frequenzsteuerung. Dies bedeutet, dass die Spannung und die Frequenz nicht mittels Rückkopplung geregelt werden, sondern dass eine direkte Beeinflussung des Spannungsvektors ohne Stromregelung erfolgt. Es wird angenommen, dass der magnetische Fluss des Rotors an dem Ende der ersten oder Synchronisationsstufe mit dem Spannungsvektor ausgerichtet ist. Der Winkel des magnetischen Flusses in dem a-β-Koordinatensystem von Fig. 1B sei mit $\gamma_{sync}$ bezeichnet. Nach der Synchronisation ist die Synchronmaschine bereit für das Hochfahren mit Spannungs-Frequenzsteuerung.

Der Spannungsvektor kann während der zweiten Stufe des Verfahrens beschrieben werden durch

$$\vec{u}_{\mathrm{up}}(t) = u_{\mathrm{up}}(t) \cdot \mathrm{e}^{\mathrm{j}(2\pi f_{\mathrm{up}}(t)\cdot t + \gamma_{\mathrm{up}})}, \qquad (6)$$

wobei $\gamma_{up}$ ein Anfangswinkel während der zweiten oder Hochfahrstufe ist und durch folgende Formel beschrieben werden kann:

$$\gamma_{\mathrm{up}} = \gamma_{\mathrm{sync}} + \Delta\gamma \qquad (7)$$

Dabei ist $\Delta\gamma$ ein von 0 verschiedener Offset bezogen auf die anfängliche Ausrichtung des Rotors bei dem Winkel $\gamma_{sync}$. Der Offset $\Delta\gamma$ stellt das Drehmoment zur Beschleunigung des Rotors an dem Beginn der zweiten oder Hochfahrstufe sicher, da das resultierende Drehmoment ansonsten gegen 0 gehen würde, wenn der Spannungsvektor vollständig mit dem magnetischen Fluss des Rotors ausgerichtet wäre. Der Absolutwert des Offsets $\Delta\gamma$ sollte geringer als 90° sein, um einen Verlust der Synchronisation zu vermeiden. Je nach Drehrichtung des Rotors der Synchronmaschine weist $\Delta\gamma$ ein positives oder negatives Vorzeichen auf.

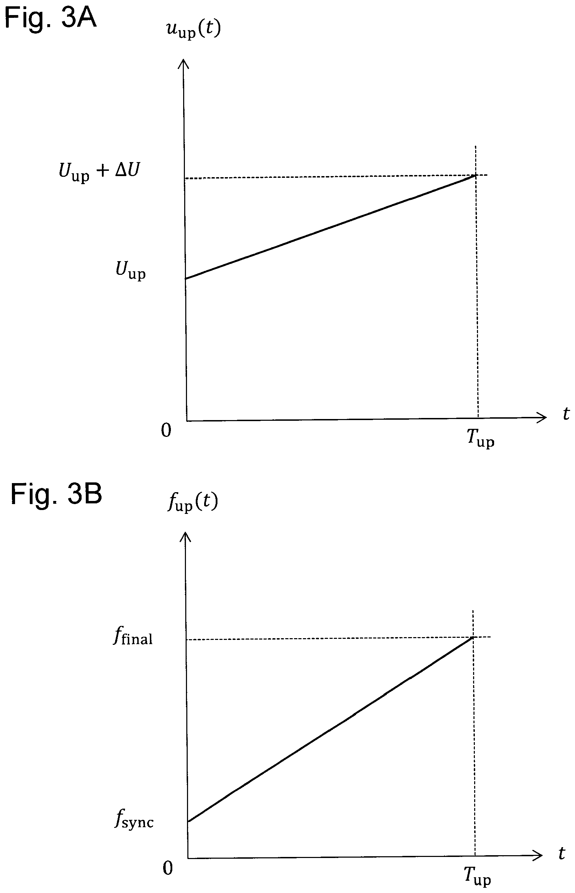

Fig. 3A und Fig. 3B zeigen den zeitlichen Verlauf des Betrags $u_{up}$ (t) bzw. der Rotationsfrequenz $f_{up}$ (t) des Spannungsvektors, wie er für die zweite Stufe gemäß Formel (6) definiert ist. Die Rotationsfrequenz $f_{up}$ (t) nimmt monoton von der konstanten Frequenz $f_{sync}$ der ersten oder Synchronisationsstufe bis zur Endfrequenz $f_{final}$ zu, die der Drehzahl der Synchronmaschine entspricht, bei welcher am Ende der zweiten oder Hochfahrstufe ein Übergang in den geberlosen Betrieb erfolgen soll. $f_{final}$ sollte daher nicht zu gering sein, um den Anforderungen eines Gegen-EMK-Modells für den geberlosen Betrieb zu genügen.

Der Betrag $u_{up}$ (t) nimmt linear von einer Anfangsspannung $u_{up}$ mit der Frequenz $f_{up}$ (t) zu, wobei eine maximale Zunahme AU bei der Enddrehzahl bzw. bei $f_{final}$ erreicht wird. Diese Zunahme des Betrags des Spannungsvektors ist notwendig, um die zunehmende Gegen-EMK zu kompensieren, da ansonsten der resultierende Windungsstrom abnehmen und eine Verringerung der Beschleunigung bewirken würde. Der Betrag der gesamten Spannungszunahme $\Delta U$ kann folgendermaßen berechnet werden:

$$\Delta U = 2\pi \cdot \Psi_{\mathrm{m}} \cdot \left(f_{\mathrm{final}} - f_{\mathrm{sync}}\right), \qquad (8)$$

wobei $\Psi_{m}$ der Betrag des magnetischen Flusses des Rotors ist. Dieser ist bei einer Permanentmagnet-Synchronmaschine als Betriebsparameter bekannt.

Das Hochfahren des Betrags $u_{up}$ und der Rotationsfrequenz $f_{up}$ erfolgt während der zweiten Stufe des Verfahrens über eine Zeitdauer $T_{up}$ (vgl. Fig. 3A und 3B). $T_{up}$ beträgt typischerweise etwa 3 bis 30 Sekunden, was von der Stärke bzw. dem Leistungsvermögen der jeweiligen Synchronmaschine abhängt. Die Zunahme des Betrags des Spannungsvektors gemäß Formel (8) berücksichtigt lediglich die Kompensation der Gegen-EMK. Wenn ein Spannungsabfall aufgrund eines zunehmenden Blindwiderstands nicht mehr vernachlässigbar ist, sollte $\Delta U$ entsprechend weiter erhöht

werden.

Am Ende der zweiten oder Hochfahrstufe mit Spannungs-Frequenzsteuerung soll die Synchronmaschine in dem geberlosen Betrieb übergeleitet werden. Dabei ist jedoch eine Initialisierung des Modells für die Gegen-EMK erforderlich, welche beispielsweise auf einer Messung der induzierten Spannung beruhen könnte. Die induzierte Spannung oder Gegen-EMK am Ende der zweiten Stufe ist jedoch nur dann messbar, wenn der Wechselrichter 11 (vgl. Fig. 1A) vorübergehend deaktiviert wird. Die Deaktivierung des Wechselrichters kann jedoch zu einem schnellen Abfallen der Drehzahl des Rotors der Synchronmaschine führen, und zwar insbesondere dann, wenn diese als Antrieb eines Systems mit einem geringen Verhältnis von Trägheitsmoment zur Last verwendet wird. Dies ist vor allem bei Vakuumpumpen und insbesondere bei Vorvakuumpumpen für den Grob- und Feinvakuumbereich der Fall. Darüber hinaus kann ein relativ geringes Trägheitsmoment des Rotors zu einer komplexen Dynamik des Antriebssystems mit vielen nichtstationären Übergangszuständen führen.

Folglich sollte der Wechselrichter 11 bei solchen Systemen für den Übergang in den geberlosen Betrieb nicht abgeschaltet werden. In diesem Fall ist die induzierte Spannung jedoch nicht direkt messbar. Obwohl die an der Synchronmaschine anliegenden Phasenspannungen und Phasenströme als Messgrößen verfügbar sind, ist eine Berechnung der induzierten Spannung anhand eines elektromagnetischen Modells jedoch aufgrund unbekannter Größen der Systemdynamik zu ungenau, welche beispielsweise eine unbekannte Winkelbeschleunigung und unbekannte Übergänge umfassen, die durch die Spannungs-Frequenzsteuerung ("O-pen Loop") hervorgerufen werden.

Es hat sich jedoch gezeigt, dass der Einfluss der unbekannten Größen der Systemdynamik gering gehalten werden kann, wenn das Verfahren zum Hochfahren der geberlosen Permanentmagnet-Synchronmaschine eine dritte oder Stabilisierungsstufe umfasst, bevor in den geberlosen Betrieb übergegangen wird. Am Ende der dritten oder Stabilisierungsstufe kann eine Initialisierung des Modells der Gegen-EMK anhand der gemessenen Phasenspannung und des gemessenen Phasenstroms erfolgen.

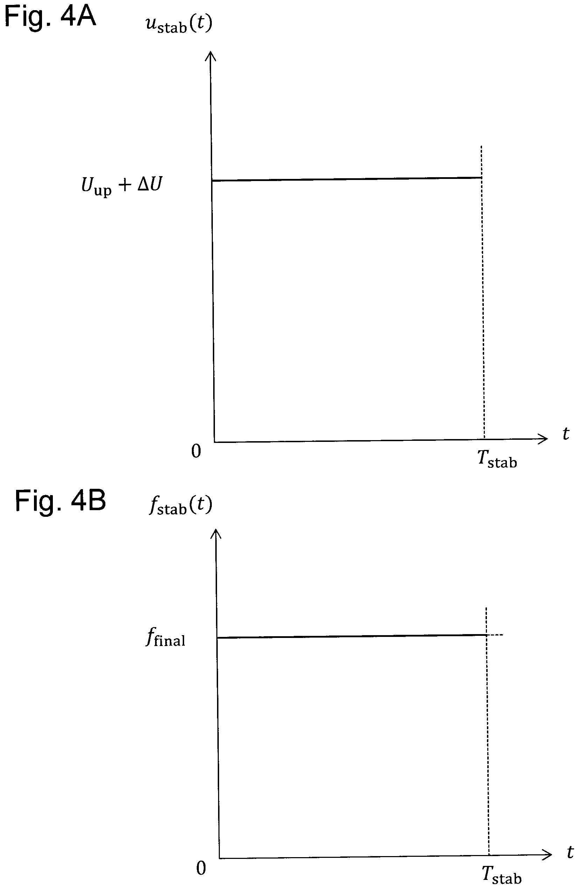

Während der dritten oder Stabilisierungsstufe hält der Wechselrichter 11 (vgl. Fig. 1) die Rotationsfrequenz $f_{final}$ und den Betrag $U_{up} + \Delta U$ des Spannungsvektors, die am Ende der zweiten oder Hochfahrstufe erreicht werden, für eine vorbestimmte Zeitdauer $T_{stab}$ aufrecht. Der zeitlich konstante Verlauf des Betrags und der Rotationsfrequenz des Spannungsvektors ist jeweils in Fig. 4A bzw. Fig. 4B gezeigt. Der Spannungsvektor ist somit insgesamt folgendermaßen gegeben:

$$\vec{u}_{stab}(t) = u_{stab}(t) \cdot e^{j(2\pi f_{stab}(t) \cdot t + \gamma_{stab})}, \tag{9}$$

wobei der Anfangswinkel $\gamma_{stab}$ des Spannungsvektors gleich dem Winkel am Ende der zweiten oder Hochfahrstufe mit Spannungs-Frequenzsteuerung sein muss, da ansonsten zusätzliche Übergänge hervorgerufen werden würden, die durch eine sprunghafte Änderung des Spannungsvektors bedingt wären.

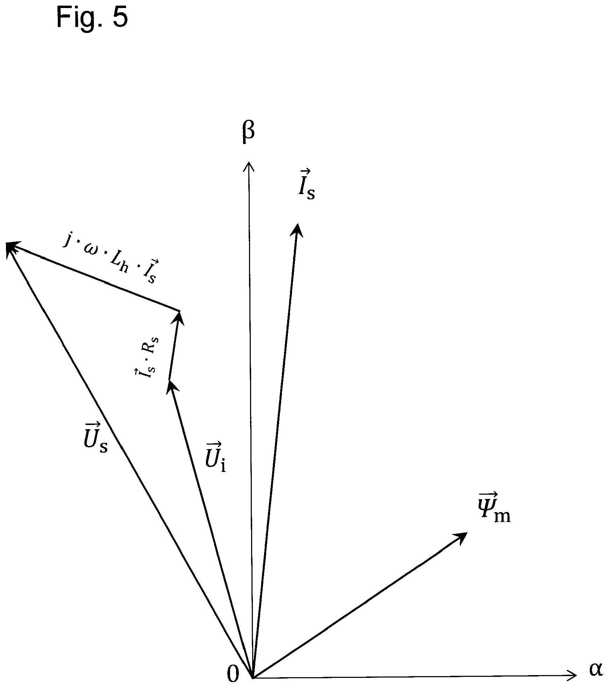

Es wird angenommen, dass sich der Rotor der Synchronmaschine nach der Zeitdauer $T_{stab}$ bei einer konstanten Winkelfrequenz $\omega = 2\pi f_{final}$ im stationären Zustand befindet. Die Vektoren der Phasenspannung, des Phasenstroms und der induzierten Spannung können als Zeiger $\vec{U}_s$, $\vec{I}_s$ und $\vec{U}_i$ für die dritte oder Stabilisierungsstufe in einem Zeigerdiagramm dargestellt werden, das in Fig. 5 in einem a-β-Koordinatensystem (vgl. auch Fig. 1B) gezeigt ist. Dabei wird angenommen, dass die Hauptinduktivität der Motorwindungen $L_h$ und der Phasenwiderstand $R_s$ als Betriebsparameter der Synchronmaschine bekannt sind.

Zur Schätzung der induzierten Spannung bzw. Gegen-EMK am Ende der dritten oder Stabilisierungsstufe wird die folgende Beziehung zwischen dem magnetischen Fluss des Rotors und der induzierten Spannung verwendet:

$$\vec{U}_i = j \cdot \omega \cdot \vec{\Psi}_m, \tag{10}$$

wobei

$$\vec{\Psi}_m = \Psi_m \cdot e^{j\gamma_m}, \tag{11}$$

Der Winkel $\gamma_m$ ist diejenige Unbekannte, die zum Initialisieren des Modells der Gegen-EMK für den geberlosen Betrieb der Synchronmaschine zu ermitteln ist, da der Betrag $\Psi_m$ des magnetischen Flusses als Parameter der Permanentmagnet-Synchronmaschine bekannt ist.

Anhand des Zeigerdiagramms von Fig. 5 ist zu erkennen, dass folgende Bedingung für den Vektor der Phasenspannung gilt:

$$\vec{U}_s = \vec{U}_i + \vec{I}_s \cdot R_s + j \cdot \omega \cdot L_h \cdot \vec{I}_s . \tag{12}$$

Wenn die gemessene Phasenspannung und der gemessene Phasenstrom in dem a-β-Koordinatensystem folgendermaßen dargestellt werden:

$$\vec{U}_s = U_\alpha + j \cdot U_\beta , \tag{13}$$

$$\vec{I}_s = I_\alpha + j \cdot I_\beta , \tag{14}$$

kann Gleichung (12) in Real- und Imaginärteil aufgespalten werden:

$$\mathrm{Re}\{\vec{U}_s\} = U_\alpha = \mathrm{Re}\{\vec{U}_i\} + I_\alpha \cdot R_s - \omega \cdot L_h \cdot I_\beta ,$$

$$\mathrm{Im}\{\vec{U}_s\} = U_\beta = \mathrm{Im}\{\vec{U}_i\} + I_\beta \cdot R_s + \omega \cdot L_h \cdot I_\alpha . \tag{15}$$

Dieses Gleichungssystem kann folgendermaßen nach der induzierten Spannung aufgelöst werden:

$$\mathrm{Re}\{\vec{U}_i\} = U_\alpha - I_\alpha \cdot R_s + \omega \cdot L_h \cdot I_\beta ,$$

$$\mathrm{Im}\{\vec{U}_i\} = U_\beta - I_\beta \cdot R_s - \omega \cdot L_h \cdot I_\alpha . \tag{16}$$

Da der Real- und der Imaginärteil der induzierten Spannung somit bekannt sind, kann der Winkel $\gamma_i$ zwischen diesen in dem $\alpha$-$\beta$-Koordinatensystem folgendermaßen berechnet werden:

$$\gamma_i = \tan^{-1} \frac{U_\beta - I_\beta \cdot R_s - \omega \cdot L_h \cdot I_\alpha}{U_\alpha - I_\alpha \cdot R_s + \omega \cdot L_h \cdot I_\beta} \tag{17}$$

Schließlich lässt sich der gesuchte Winkel $\gamma_m$ für den magnetischen Fluss des Rotors folgendermaßen berechnen:

$$\gamma_m = \gamma_i - \mathrm{sign}(\omega) \cdot \frac{\pi}{2} . \tag{18}$$

Am Ende der dritten oder Stabilisierungsstufe ist es notwendig, eine Validierungsmaßnahme des Hochfahrens mit einer Überprüfung der geschätzten induzierten Spannung für das Modell der Gegen-EMK durchzuführen, da nicht davon ausgegangen werden kann, dass das Hochfahren der Synchronmaschine in jedem Fall erfolgreich ist. Es kann beispielsweise ein technischer Fehler wie etwa eine mechanisch blockierte Synchronmaschine auftreten.
Da eine direkte Messung der Gegen-EMK ein Abschalten des Wechselrichters 11 voraussetzen würde und dies nicht gewünscht ist, muss auch die Validierungsmaßnahme indirekt implementiert werden, d. h. ohne eine direkte Messung der induzierten Spannung. Anhand Gleichung (16) kann der Betrag der induzierten Spannung bzw. der Gegen-EMK folgendermaßen geschätzt werden:

$$\left|\vec{U_\mathrm{i}}\right| = \sqrt{\mathrm{Re}^2\{\vec{U_\mathrm{i}}\} + \mathrm{Im}^2\{\vec{U_\mathrm{i}}\}} \,. \qquad (19)$$

Wenn das Hochfahren erfolgreich ist und sich der magnetische Fluss des Rotors mit $\omega = 2\pi\, f_\mathrm{final}$ dreht, gilt Folgendes:

$$\left|\vec{U_\mathrm{i}}\right| \approx \omega \cdot \Psi_\mathrm{m} \,, \qquad (20)$$

und der magnetische Fluss des Rotors $\vec{\Psi_\mathrm{m}}$ rotiert mit $\omega = 2\pi f_\mathrm{final}$, ansonsten geht der Betrag der induzierten Spannung gegen 0.

Aufgrund von Unsicherheiten bezüglich $R_\mathrm{s}$, $L_\mathrm{h}$ und $\Psi_\mathrm{m}$ und Messfehlern bei der Messung der Phasenspannung und des Phasenstroms kann jedoch die Gleichung (20) nicht direkt zur Validierung des Hochfahrens verwendet werden. Stattdessen wird ein Streufaktor $\sigma$ mit $\sigma \in (0,1)$ eingeführt, um das Hochfahren anhand der folgenden Gleichung zu validieren:

$$(1 - \sigma) \cdot \omega \cdot \Psi_\mathrm{m} \leq \left|\vec{U_\mathrm{i}}\right| \leq (1 + \sigma) \cdot \omega \cdot \Psi_\mathrm{m} \,. \qquad (21)$$

Zur Validierung des Hochfahrens werden somit zunächst Real- und Imaginärteil der induzierten Spannung bzw. der Gegen-EMK anhand Gleichung (16) geschätzt, um den Betrag der Gegen-EMK anhand Gleichung (19) zu berechnen und zu überprüfen, ob die Bedingung gemäß Gleichung (21) erfüllt ist. Ist dies der Fall, kann der Winkel $\gamma_\mathrm{m}$ des magnetischen Flusses des Rotors anhand der Gleichungen (17) und (18) berechnet werden, um das Modell der Gegen-EMK für den geberlosen Betrieb zu initialisieren. In diesem Fall wird das Hochfahren als erfolgreich angesehen.

Ist die Bedingung gemäß Gleichung (21) jedoch nicht erfüllt, wird das Hochfahren als fehlgeschlagen bewertet. In diesem Fall wird das Verfahren zum Hochfahren der Synchronmaschine mit der ersten oder Synchronisationsstufe erneut gestartet. Für die Anzahl der fehlgeschlagenen Versuche des Hochfahrens wird ein Zähler verwendet, der bei jedem erfolgreichen Hochfahren der Synchronmaschine auf 0 zurückgesetzt wird und bei jedem fehlgeschlagenen Versuch des Hochfahrens um 1 erhöht wird. Erreicht der Zähler eine vorbestimmte Anzahl für aufeinanderfolgende fehlgeschlagene Versuche des Hochfahrens, wird eine Fehlermeldung ausgegeben.

Das Verfahren zum Hochfahren der geberlosen Permanentmagnet-Synchronmaschine ist bei Vakuumpumpen anwendbar, die mit einer solchen Permanentmagnet-Synchronmaschine betrieben werden. Fig. 6 zeigt schematisch eine beispielhafte Vakuumanlage mit einem Rezipienten 13, der mit einer Turbomolekularpumpe 15 verbunden ist. Die Turbomolekularpumpe 15 umfasst pumpaktive Strukturen wie beispielsweise Rotorscheiben, die zu einem Rotor 17 gehören. Zum Antreiben des Rotors 17 der Turbomolekularpumpe 15 kann eine Permanentmagnet-Synchronmaschine verwendet werden.

Die Turbomolekularpumpe 15 wiederum ist mit einer Vorvakuumpumpe 19 verbunden, die ebenfalls einen Rotor 21 als Teil der pumpaktiven Elemente der Vorvakuumpumpe 19 umfasst. Zum Antreiben des Rotors 21 dient eine geberlose Permanentmagnet-Synchronmaschine 23, die den Wechselrichter 11 von Fig. 1 aufweist. Bei Inbetriebnahme der Vakuumanlage wird zunächst die Vorvakuumpumpe 19 eingeschaltet, bis in dem Rezipienten 13 ein geeigneter Unterdruck zum Einschalten der Turbomolekularpumpe 15 vorhanden ist.

Beim Hochfahren der Turbomolekularpumpe 15 kann ein Wechselrichter am Ende des Hochfahrens kurzzeitig deaktiviert werden, um die induzierte Spannung zu messen und den geberlosen Betrieb zu initialisieren. Bei der Vorvakuumpumpe 19 hingegen würde die Drehzahl aufgrund der Reibung zu schnell abfallen, wenn der Wechselrichter 11 nach dem Hochfahren der Vorvakuumpumpe 19 abgeschaltet werden würde. Daher ist eine Messung der induzierten Spannung zum Initialisieren des geberlosen Betriebs beim Hochfahren der Vorvakuumpumpe 19 normalerweise nicht möglich. Wenn jedoch das Verfahren zum Hochfahren der Synchronmaschine 23 der Vorvakuumpumpe 19 verwendet wird, ist kein Abschalten des Wechselrichters 11 zur Initialisierung des geberlosen Betriebs erforderlich, da die entsprechende induzierte Spannung zur Initialisierung geschätzt wird und der Wechselrichter 11 somit eingeschaltet bleiben kann.

**Bezugszeichenliste**

| | |
|---|---|
| 11 | Drehstrom-Wechselrichter |
| 13 | Rezipient |
| 15 | Turbomolekularpumpe |
| 17 | Rotor |
| 19 | Vorvakuumpumpe |
| 21 | Rotor |
| 23 | Permanentmagnet-Drehstromsynchronmaschine |
| U, V, W | Phasen des Wechselrichters |
| $U_{dc}$ | Zwischenkreisspannung |
| $u_v, u_u, u_w$ | Ausgangsspannungen |
| $\lambda_\zeta$ | Taktverhältnis für eine jeweilige Phase $\zeta$ |
| $\vec{u}$ | Spannungsvektor |
| $u_\alpha$ | Realteil eines Spannungsvektors |
| $u_\beta$ | Imaginärteil eines Spannungsvektors |
| $\vec{u}_{sync}$ | Synchronisations-Spannungsvektor |
| $U_{sync}$ | Betrag des Spannungsvektors während der Synchronisation |
| $f_{sync}$ | Rotationsfrequenz während der Synchronisation |
| $T_{sync}$ | Zeitdauer der ersten oder Synchronisationsstufe |
| $\gamma_{sync}$ | Winkel des Spannungsvektors am Ende der ersten Stufe |
| $\vec{u}_{up}$ | Hochlauf-Spannungsvektor |
| $u_{up}$ | Betrag des Spannungsvektors während des Hochlaufs |
| $f_{up}$ | Rotationsfrequenz während des Hochlaufs |
| $\gamma_{up}$ | Anfangswinkel des Spannungsvektors während des Hochlaufs |
| $\Delta\gamma$ | Offset des Phasenwinkels |
| $\Delta U$ | Spannungsinkrement |
| $\Psi_M$ | magnetische Flussdichte der Drehstrommaschine |
| $f_{final}$ | Rotationsfrequenz am Ende der Hochlaufstufe |
| $T_{up}$ | Zeitdauer der zweiten oder Hochlaufstufe |
| $\ddot{U}_{stab}$ | Stabilisierungs-Spannungsvektor |
| $u_{stab}$ | Betrag des Spannungsvektors während der Stabilisierung |
| $f_{stab}$ | Rotationsfrequenz während der Stabilisierung |
| $T_{stab}$ | Zeitdauer der dritten oder Stabilisierungsstufe |
| $\gamma_{stab}$ | Phasenwinkel des Spannungsvektors während der Stabilisierungsstufe |
| $\vec{U}_s$ | Vektor der Phasenspannung |
| $\vec{I}_s$ | Vektor des Phasenstroms |
| $\vec{U}_i$ | Vektor der induzierten Spannung (Gegen-EMK) |
| $R_s$ | Phasenwiderstand |
| $L_h$ | Hauptinduktivität |
| $\gamma_m$ | Phasenwinkel des magnetischen Flusses |
| $\gamma_i$ | Phasenwinkel der induzierten Spannung |
| $\sigma$ | Streufaktor |

**Patentansprüche**

1. Verfahren zum Hochfahren einer geberlosen Permanentmagnet-Drehstromsynchronmaschine (23), die insbesondere für eine Vakuumpumpe (19) vorgesehen ist, mittels eines Drehstrom-Wechselrichters (11) vom Stillstand bis zu einer vorbestimmten Drehzahl,
   wobei Spannungen, die zum Ansteuern der Permanentmagnet-Drehstromsynchronmaschine (23) verwendet werden, anhand eines Spannungsvektors mit einem Betrag und einem Phasenwinkel definiert sind, wobei der Spannungsvektor in einem orthogonalen Koordinatensystem einen Realteil $u_\alpha$ und einen Imaginärteil $u_\beta$ umfasst, die sich aus einer Clark-Transformation ergeben,
   wobei das Verfahren umfasst, dass:

i) während einer ersten Stufe des Hochfahrens der Betrag ($u_{sync}$) des Spannungsvektors zunächst zunimmt und anschließend derart abnimmt, dass ein Maximum des Betrags ($u_{sync}$) des Spannungsvektors weder zu Beginn der ersten Stufe noch am Ende der ersten Stufe auftritt,

ii) während einer zweiten Stufe des Hochfahrens sowohl der Betrag ($u_{up}$) als auch eine Rotationsfrequenz ($f_{up}$) des Spannungsvektors zunehmen, und

iii) während einer dritten Stufe des Hochfahrens sowohl der Betrag ($u_{stab}$) als auch die Rotationsfrequenz ($f_{stab}$) des Spannungsvektors konstant bleiben und am Ende der dritten Stufe eine Validierungsmaßnahme des Hochfahrens ausgeführt wird.

2. Verfahren nach Anspruch 1, wobei

die Validierungsmaßnahme am Ende der dritten Stufe eine Schätzung einer rückwirkenden elektromotorischen Kraft (Gegen-EMK) ($\vec{U}_i$) umfasst, und

das Hochfahren der 2. Permanentmagnet-Drehstromsynchronmaschine anhand der Schätzung der Gegen-EMK ($U_i$) entweder als erfolgreich oder als fehlgeschlagen bewertet wird.

3. Verfahren nach Anspruch 2, wobei

wobei die Gegen-EMK ($\vec{U}_i$) anhand gemessener Phasenspannungen ($\vec{U}_s$) und Phasenströme ($\vec{I}_s$) der Permanentmagnet-Drehstromsynchronmaschine sowie anhand von Parametern der Synchronmaschine geschätzt wird.

4. Verfahren nach Anspruch 3, wobei

die Parameter der Permanentmagnet-Drehstromsynchronmaschine einen Phasenwiderstand ($R_s$) sowie eine Windungshauptinduktivität ($L_h$) und einen Betrag des magnetischen Flusses ($\Psi_M$) eines Rotors der Synchronmaschine umfassen.

5. Verfahren nach Anspruch 4, wobei

der Betrag ($U_i$) der geschätzten Gegen-EMK mit einem theoretischen Wert verglichen wird, der anhand eines Produkts des Betrages des magnetischen Flusses ($\Psi_M$) des Rotors der Permanentmagnet-Drehstromsynchronmaschine und der Rotationsfrequenz des Spannungsvektors während der dritten Stufe ermittelt wird.

6. Verfahren nach Anspruch 5, wobei

das Hochfahren der Permanentmagnet-Drehstromsynchronmaschine als erfolgreich bewertet wird, wenn der Betrag ($U_i$) der geschätzten Gegen-EMK höchstens um einen vorbestimmten Wert von dem theoretischen Wert abweicht, und ansonsten als fehlgeschlagen bewertet wird.

7. Verfahren nach einem der Ansprüche 2 bis 6, wobei

die Permanentmagnet-Drehstromsynchronmaschine Z dann, wenn das Hochfahren als erfolgreich bewertet wird, in einen Betriebsmodus mit einer Regelung basierend auf einem Modell für die Gegen-EMK, das mit der während der dritten Stufe geschätzten Gegen-EMK initialisiert wird, übergeleitet wird.

8. Verfahren nach einem der Ansprüche 2 bis 7, wobei

dann, wenn das Hochfahren als fehlgeschlagen bewertet wird, unter Verwendung eines unabhängigen Überwachungsmittels entschieden wird, ob die Permanentmagnet-Drehstromsynchronmaschine erneut gestartet wird.

9. Verfahren nach Anspruch 8, wobei

das unabhängige Überwachungsmittel einen Zähler umfasst,

der Zähler jedes Mal dann, wenn das Hochfahren als erfolgreich bewertet wird, auf Null zurückgesetzt wird, und dann, wenn das Hochfahren als fehlgeschlagen bewertet wird, um Eins erhöht wird und

eine Fehlermeldung ausgegeben wird, wenn der Zähler eine vorbestimmte Zahl erreicht.

10. Verfahren nach einem der vorstehenden Ansprüche,

wobei während der ersten Stufe

der Betrag des Spannungsvektors von Null bis zu einem Maximalwert ($U_{sync}$) zunimmt und anschließend bis zu einem Wert abnimmt, der größer als Null ist, und

die Rotationsfrequenz ($f_{sync}$) des Spannungsvektors Null oder weniger als 10 Hertz beträgt.

**11.** Verfahren nach einem der vorstehenden Ansprüche,
wobei während der zweiten Stufe

die Rotationsfrequenz ($f_{up}$) des Spannungsvektors linear von einem Anfangswert bis zu einem Endwert ($f_{final}$) zunimmt und
der Anfangswert vorbestimmt und insbesondere gleich einer konstanten Rotationsfrequenz ($f_{sync}$) des Spannungsvektors während der ersten Stufe ist.

**12.** Verfahren nach Anspruch 11, wobei
eine Differenz zwischen dem Endwert ($f_{final}$) und dem Anfangswert zu einer Zunahme ($\Delta U$) des Betrags des Spannungsvektors, die durch die Zunahme der Rotationsfrequenz hervorgerufen wird, proportional ist.

**13.** Verfahren nach einem der vorstehenden Ansprüche,
wobei bei dem Übergang von der ersten zu der zweiten Stufe eine sprunghafte Änderung ($\Delta\gamma$) des Phasenwinkels des Spannungsvektors auftritt, die geringer als 90° ist und in Drehrichtung des Spannungsvektors erfolgt.

**14.** Permanentmagnet-Drehstromsynchronmaschine (23), insbesondere für eine Vakuumpumpe, mit einem Drehstrom-Wechselrichter (11), welche ausgebildet ist, um mittels des Drehstrom-Wechselrichters (11) durch die Ausführung eines Verfahrens nach einem der vorstehenden Ansprüche vom Stillstand bis zu einer vorbestimmten Drehzahl hochgefahren zu werden.

**15.** Vakuumpumpe mit einer Permanentmagnet-Drehstromsynchronmaschine (23) nach Anspruch 14.

**Claims**

**1.** A method of starting up an encoderless three-phase permanent magnet synchronous machine (23), which is in particular provided for a vacuum pump (19), from a standstill up to a predetermined rotational speed by means of a three-phase inverter (11),

wherein voltages which are used to control the three-phase permanent magnet synchronous machine (23) are defined based on a voltage vector having a magnitude and a phase angle,
wherein the voltage vector in an orthogonal coordinate system comprises a real part $u_\alpha$ and an imaginary part up which result from a Clark transformation,
wherein the method comprises that:

i) during a first stage of the starting up, the magnitude ($u_{sync}$) of the voltage vector first increases and subsequently decreases such that a maximum of the magnitude ($u_{sync}$) of the voltage vector does not occur either at the start of the first stage or at the end of the first stage,
ii) during a second stage of the starting up, both the magnitude ($u_{up}$) and a rotational frequency ($f_{up}$) of the voltage vector increase, and
iii) during a third stage of the starting up, both the magnitude ($u_{stab}$) and the rotational frequency ($f_{stab}$) of the voltage vector remain constant and a validation measure of the starting up is performed at the end of the third stage.

**2.** A method in accordance with claim 1, wherein

the validation measure at the end of the third stage comprises an estimation of a back electromotive force (back EMF) ($\vec{U}_i$), and
the starting up of the three-phase permanent magnet synchronous machine is assessed either as successful or as failed based on the estimation of the back EMF ($\vec{U}_i$).

**3.** A method in accordance with claim 2, wherein
the back EMF ($\vec{U}_i$) is estimated based on measured phase voltages ($\vec{U}_s$) and phase currents ($\vec{I}_s$) of the three-phase permanent magnet synchronous machine and based on parameters of the synchronous machine.

**4.** A method in accordance with claim 3, wherein

the parameters of the three-phase permanent magnet synchronous machine comprise a phase resistance ($R_s$) and a main winding inductance ($L_h$) and a magnitude of the magnetic flux ($\Psi_M$) of a rotor of the synchronous machine.

5. A method in accordance with claim 4, wherein
the magnitude ($U_i$) of the estimated back EMF is compared with a theoretical value which is determined based on a product of the magnitude of the magnetic flux ($\Psi_M$) of the rotor of the three-phase permanent magnet synchronous machine and the rotational frequency of the voltage vector during the third stage.

6. A method in accordance with claim 5, wherein
the starting up of the three-phase permanent magnet synchronous machine is assessed as successful if the magnitude ($U_i$) of the estimated back EMF deviates from the theoretical value by at most a predetermined value and is otherwise assessed as failed.

7. A method in accordance with any one of the claims 2 to 6, wherein,
when the starting up is assessed as successful, the three-phase permanent magnet synchronous machine is switched into an operating mode comprising a regulation based on a model for the back EMF which is initialized with the back EMF estimated during the third stage.

8. A method in accordance with any one of the claims 2 to 7, wherein, when the starting up is assessed as failed, a decision is made using an independent monitoring means as to whether the three-phase permanent magnet synchronous machine is restarted again.

9. A method in accordance with claim 8, wherein

the independent monitoring means comprises a counter,
the counter is reset to zero every time the starting up is assessed as successful and is increased by one when the starting up is assessed as failed, and
an error message is output when the counter reaches a predetermined number.

10. A method in accordance with any one of the preceding claims, wherein, during the first stage,

the magnitude of the voltage vector increases from zero up to a maximum value ($U_{sync}$) and then decreases down to a value greater than zero, and
the rotational frequency ($f_{sync}$) of the voltage vector amounts to zero or less than 10 Hertz.

11. A method in accordance with any one of the preceding claims,
wherein, during the second stage,

the rotational frequency ($f_{up}$) of the voltage vector increases linearly from a starting value up to a final value ($f_{final}$), and
the starting value is predetermined and is in particular equal to a constant rotational frequency ($f_{sync}$) of the voltage vector during the first stage.

12. A method in accordance with claim 11, wherein
a difference between the final value ($f_{final}$) and the starting value is proportional to an increase ($\Delta U$) in the magnitude of the voltage vector which is caused by the increase in the rotational frequency.

13. A method in accordance with any one of the preceding claims,
wherein, on the transition from the first to the second stage, an abrupt change ($\Delta\gamma$) in the phase angle of the voltage vector occurs which is less than 90° and which takes place in the direction of rotation of the voltage vector.

14. A three-phase permanent magnet synchronous machine (23), in particular for a vacuum pump, comprising a three-phase inverter (11) which is configured to be started up from a standstill up to a predetermined rotational speed by means of the three-phase inverter (11) by performing a method in accordance with any one of the preceding claims.

15. A vacuum pump comprising a three-phase permanent magnet synchronous machine (23) in accordance with claim 14.

**Revendications**

1. Procédé de démarrage d'une machine synchrone triphasée à aimants permanents (23) dépourvue de capteur, prévue en particulier pour une pompe à vide (19), au moyen d'un onduleur triphasé (11) pour passer de l'arrêt à une vitesse de rotation prédéterminée,

   dans lequel des tensions utilisées pour piloter la machine synchrone triphasée à aimants permanents (23) sont définies à l'aide d'un vecteur de tension avec une norme et un angle de phase,
   dans un système de coordonnées orthogonal, le vecteur de tension comprend une partie réelle $u_\alpha$ et une partie imaginaire up qui résultent d'une transformée de Clarke,
   le procédé comprenant que :

   i) pendant une première étape du démarrage, la norme ($u_{sync}$) du vecteur de tension augmente d'abord et diminue ensuite de telle sorte qu'un maximum de la norme ($u_{sync}$) du vecteur de tension n'apparaît ni au début de la première étape ni à la fin de la première étape,
   ii) pendant une deuxième étape du démarrage, aussi bien la norme ($u_{up}$) qu'une fréquence de rotation ($f_{up}$) du vecteur de tension augmentent, et
   iii) pendant une troisième étape du démarrage, aussi bien la norme ($u_{stab}$) que la fréquence de rotation ($f_{stab}$) du vecteur de tension restent constantes et, à la fin de la troisième étape, il se produit une action de validation du démarrage.

2. Procédé selon la revendication 1, dans lequel
   l'action de validation à la fin de la troisième étape comprend une estimation d'une force électromotrice rétroactive (force contre-électromotrice) ($\vec{U_i}$), et le démarrage de la machine synchrone triphasée à aimants permanents est jugé soit comme réussi, soit comme échoué, sur la base de l'estimation de la force contre-électromotrice ($\vec{U_i}$).

3. Procédé selon la revendication 2,
   dans lequel la force contre-électromotrice ($\vec{U_i}$) est estimée à l'aide de tensions de phase ($\vec{U_s}$) et des courants de phase ($\vec{I_s}$) mesurés de la machine synchrone triphasée à aimants permanents ainsi qu'à l'aide de paramètres de la machine synchrone.

4. Procédé selon la revendication 3,
   dans lequel les paramètres de la machine synchrone triphasée à aimants permanents comprennent une résistance de phase ($R_s$) ainsi qu'une inductance principale de spire ($L_h$) et une valeur du flux magnétique ($\Psi_M$) d'un rotor de la machine synchrone.

5. Procédé selon la revendication 4,
   dans lequel la valeur ($U_i$) de la force contre-électromotrice estimée est comparée à une valeur théorique qui est déterminée à partir d'un produit de la valeur du flux magnétique ($\Psi_M$) du rotor de la machine synchrone triphasée à aimants permanents et de la fréquence de rotation du vecteur de tension pendant la troisième étape.

6. Procédé selon la revendication 5,
   dans lequel le démarrage de la machine synchrone triphasée à aimants permanents est jugé réussi si la valeur ($U_i$) de la force contre-électromotrice estimée s'écarte au maximum d'une valeur prédéterminée de la valeur théorique, et est jugé échoué dans le cas contraire.

7. Procédé selon l'une des revendications 2 à 6,
   dans lequel, si le démarrage est jugé réussi, la machine synchrone triphasée à aimants permanents est transférée dans un mode de fonctionnement avec une régulation basée sur un modèle de la force contre-électromotrice, qui est initialisé avec la force contre-électromotrice estimée pendant de la troisième étape.

8. Procédé selon l'une des revendications 2 à 7,
   dans lequel, si le démarrage est jugé échoué, il est décidé de redémarrer ou non la machine synchrone triphasée à aimants permanents en utilisant un moyen de surveillance indépendant.

9. Procédé selon la revendication 8,
   dans lequel le moyen de surveillance indépendant comprend un compteur, le compteur est remis à zéro chaque fois que le démarrage est jugé réussi, et est incrémenté de un chaque fois que le démarrage est jugé échoué, et un message d'erreur est émis lorsque le compteur atteint un nombre prédéterminé.

10. Procédé selon l'une des revendications précédentes,
dans lequel, pendant la première étape
la norme du vecteur de tension augmente pour passer de zéro à une valeur maximale ($U_{sync}$), puis diminue jusqu'à une valeur supérieure à zéro, et la fréquence de rotation ($f_{sync}$) du vecteur de tension est égale à zéro ou à 10 hertz.

11. Procédé selon l'une des revendications précédentes,
dans lequel, pendant la deuxième étape,
la fréquence de rotation ($f_{up}$) du vecteur de tension augmente linéairement pour passer d'une valeur initiale à une valeur finale ($f_{final}$), et
la valeur initiale est prédéterminée et en particulier égale à une fréquence de rotation constante ($f_{sync}$) du vecteur de tension pendant la première étape.

12. Procédé selon la revendication 11,
dans lequel une différence entre la valeur finale ($f_{final}$) et la valeur initiale est proportionnelle à une augmentation ($\Delta U$) de la norme du vecteur de tension provoquée par l'augmentation de la fréquence de rotation.

13. Procédé selon l'une des revendications précédentes,
dans lequel, lors du passage de la première à la deuxième étape, il se produit une variation brusque ($\Delta\gamma$) de l'angle de phase du vecteur de tension, qui est inférieure à 90° et qui se produit dans le sens de rotation du vecteur de tension.

14. Machine synchrone triphasée à aimants permanents (23), en particulier pour une pompe à vide, comprenant un onduleur triphasé (11), qui est réalisée pour être démarrée de l'arrêt jusqu'à une vitesse de rotation prédéterminée au moyen de l'onduleur triphasé (11) par la mise en œuvre d'un procédé selon l'une des revendications précédentes.

15. Pompe à vide comprenant une machine synchrone triphasée à aimants permanents (23) selon la revendication 14.

## Fig. 1A

11

$s_\zeta$: Schaltzustand
$s_\zeta = H, L;\ \zeta = U, V, W$

$s_U$   $s_V$   $s_W$

$u_V$

$u_U$

$U_{dc}$

$u_\zeta$: Spannungspotential
$u_\zeta = U_{dc}$ wenn $s_\zeta = H$
$u_\zeta = 0$ wenn $s_\zeta = L$

$u_W$

$I_{dc}$

$u_\beta$

$$\vec{u} = u_\alpha + j \cdot u_\beta$$

$\vec{u}$

## Fig. 1B

$0$   $u_\alpha$

## Fig. 2

Fig. 3A

$u_{up}(t)$

$U_{up} + \Delta U$

$U_{up}$

0

$T_{up}$

$t$

Fig. 3B

$f_{up}(t)$

$f_{final}$

$f_{sync}$

0

$T_{up}$

$t$

## Fig. 4A

$u_{\mathrm{stab}}(t)$

$U_{\mathrm{up}} + \Delta U$

$0$

$T_{\mathrm{stab}}$

$t$

## Fig. 4B

$f_{\mathrm{stab}}(t)$

$f_{\mathrm{final}}$

$0$

$T_{\mathrm{stab}}$

$t$

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3413458 A1